# EUROPÄISCHE PATENTANMELDUNG

(11) **EP 1 717 119 A1**
(43) Veröffentlichungstag der Anmeldung: **02.11.2006**
(21) Anmeldenummer: 06006649.5
(22) Anmeldetag: 30.03.2006
(51) Int. Cl.: B60S 3/00

(54) **Trocknungsrahmen für eine Fahrzeugwaschanlage**

(30) Priorität: 28.04.2005 DE 102005019618
(71) Anmelder: Decker, Wolfgang, 86441 Zusmarshausen-Wollbach (DE)
(72) Erfinder: Decker, Wolfgang, 86441 Zusmarshausen-Wollbach (DE)
(74) Vertreter: Munk, Ludwig

(57) **Zusammenfassung**

Es wird ein Trocknungsrahmen für Fahrzeugwaschanlagen vorgeschlagen, der zumindest einer höhenverfahrbaren Traverse (T) aufweist, an der eine Gebläseeinrichtung (V1, V2) zum Trocknen von von der Traverse (T) zu überstreichenen Flächen eines Fahrzeugs (F) angebracht ist. Die Gebläseeinrichtung (V1, V2) weist eine untere Abschlusskontur der Traverse (T) vorgebende Düsenmundanordnung (D1, D2) auf, wobei die Höhenlage der Traverse entsprechend eines gewünschten Abstands der unteren Abschlusskontur der Traverse (T) von dem zu überstreichenden Fahrzeug (F) steuerbar ist. Der Trocknungsrahmen zeichnet sich dadurch aus, dass die untere Abschlusskontur der Traverse (T) an einem in etwa der Mitte der Fahrzeugbreite befindlichen Bereich und an beiden Seitenenden des Fahrzeugs entsprechenden Bereichen nach oben zurückweicht und Lichträume (L1, L2, L3) freigibt.

## Beschreibung

Die Erfindung betrifft einen Trocknungsrahmen für eine Fahrzeugwaschanlage gemäß Oberbegriff des Anspruchs 1.

Bekannte Fahrzeugwaschanlagen sind üblicherweise als Portalwaschanlagen mit einem verfahrbaren Arbeitsportal bei stehendem Fahrzeug oder als Waschstraßen mit feststehenden Arbeitsstationen und Fahrzeugdurchschleusung ausgestaltet. Für die Trocknung vornehmlich der horizontalen Flächen von Fahrzeugen (Motorhaube, Dach, Kofferraum) sind dabei zwei unterschiedliche Verfahren bekannt:

Bei dem ersten Verfahren werden auf einer feststehenden Maschinentraverse, die in einer Höhe angeordnet ist, welche so gewählt ist, dass alle zu trocknenden Fahrzeuge darunter passieren können, Gebläse montiert, die mit einer lagefesten Luftaustrittsdüse versehen sind. Zwar ist eine derartige Anlage prinzipiell für alle der Durchfahrtshöhe der Trocknungsstation bzw. des Trocknungsportals entsprechenden Fahrzeuge geeignet. Der Nachteil dieses Verfahrens liegt jedoch darin, dass bei Fahrzeugen geringerer Höhe der Trocknungseffekt stark nachläßt. Der Einsatz stärkerer Gebläse scheitert wiederum oft aus wirtschaftlichen Gründen, d.h. an zu hohen Betriebskosten, aus technischen Gründen, d.h. Platzmangel, sowie daran, dass die behördlich vorgeschriebenen Emissionswerte mit derartig überdimensionierten Anlagen nicht eingehalten werden können.

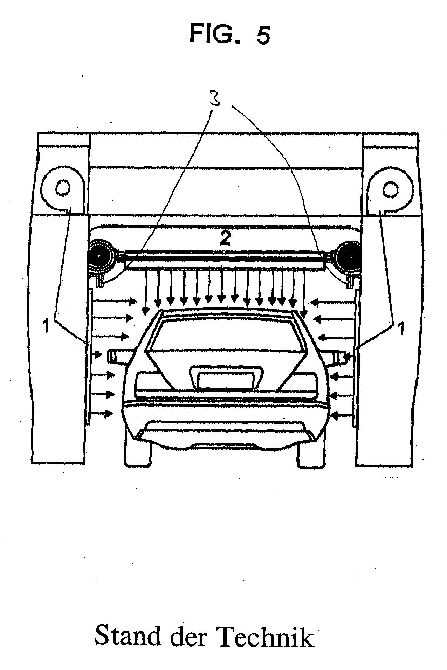

Ferner sind heute sogenannte konturfolgenden Tastdüsen üblich. Dabei ist auf einer höhenverfahrbaren Maschinentraverse ein Gebläsekasten mit einer über die gesamte Trocknungsbreite reichenden Trockendüse montiert. Die Höhensteuerung der Maschinentraverse erfolgt dabei über Lichtschranken oder anderweitige geeignete Steuereinrichtungen, die das in die Trocknungsstation einfahrende bzw. das vom Trocknungsportal überstrichene Fahrzeug abtasten. Ein derartiges Trocknungssystem ist in Figur 5 dargestellt. Figur 5 zeigt eine Portalwaschanlage, in der sich ein gereinigter und nun zu trocknender PKW befindet. Am Portal ist ein Trocknungssystem vorgesehen, welches eine Seitengebläseeinrichtung 1 mit zwei Seitengebläseventilatoren und zwei Seitendüsen aufweist, sowie eine als konturfolgende Tastdüse ausgebildete Dachdüse 2 mit integriertem Gebläse. Die Dachdüse 2 ist dabei an einer Traverse befestigt und kann so auf Seitenführungsschienen geführt auf und ab bewegt werden. Die Auf- und Abwärtsbewegung erfolgt dabei beispielsweise stufenlos über einen Flachriemen und einen geeigneten Hubantrieb. Die Konturabtastung des Fahrzeugs erfolgt durch eine Infrarot-Lichtschrankensteuerung. Dazu befinden sich rechts und links von der konturfolgenden Tastdüse mehrere Lichtschranken 3. Wie man erkennt, erstreckt sich dabei der Düsenmund der konturfolgenden Tastdüse über die gesamte Breite der Traverse hinweg, wobei die Versorgung durch zwei links und rechts am Dachdüsengebläsekasten befestigten Ventilatoren erfolgt. Daraus ergibt sich eine relativ geringe Wurfweite der Dachdüse 2, so dass ein relativ geringer Abstand zum zu trocknenden Fahrzeug einzuhalten ist.

Vor allem bei Fahrzeugen mit Dach- bzw. Seitenaufbauten, wie beispielsweise Blaulichtern, Taxischildern, auf dem Dach montierten Mittelantennen, sowie in den USA und amerikanisch beeinflussten Märkten üblichen, starren Seitenantennen besteht dabei die Gefahr, das diese beschädigt oder abgebrochen werden. Auch bei Dachrelings oder am Fahrzeugheck angebrachten Reservereifen besteht die Gefahr, dass die Lichtschranke das Hindernis nicht als solches erkennt, sondern der Außenkontur des PKWs folgt, ohne die Auf- und Anbauten zu berücksichtigen, wodurch Beschädigungen am Fahrzeug und daraus resultierende Gewährleistungsansprüche gegen den Betreiber der Waschanlage entstehen.

Aufgabe der Erfindung ist es daher, einen Trocknungsrahmen für Fahrzeugwaschanlagen bereitzustellen, bei dem bei niedrigem Energieeinsatz der vom Fahrzeugbesitzer erwartete Trocknungseffekt gewährleistet wird, ohne Haftungsrisiken für den Betreiber durch Beschädigungen an den zu trocknenden Fahrzeugen zu verursachen.

Diese Aufgabe wird mit den Merkmalen des Anspruchs 1 gelöst.

Erfindungsgemäß ist dabei eine Gebläseeinrichtung mit einer Düsenmundanordnung an der Traverse vorgesehen, die die untere Abschlußkontur der Traverse nicht als waagrecht durchgehende Linie vorgibt, sondern in einem in etwa der Mitte der Fahrzeugbreite entsprechenden Bereich und an den beiden Seitenflanken bzw. -enden des Fahrzeugs entsprechenden Bereichen Lichträume freigibt, so dass nicht erkannte Dach- bzw. Seitenan- oder -aufbauten selbst dann nicht berührt werden, wenn die zum Abtasten des Fahrzeugs vorgesehenen Sensoren und damit die deren Eingabe auswertende Höhensteuerung der Traverse und der damit verbundenen Gebläseeinrichtung diese Hindernisse nicht erkennt. Die Traverse ist dabei beispielsweise auf an entsprechenden Säulen der Waschanlage angebrachten seitlichen Führungsschienen höhenverfahrbar, wobei die Höhenlage der Traverse entsprechend einer Eingabe von zum Abtasten des Fahrzeugs (F) vorgesehenen Sensoren, wie beispielsweise einer Lichtschranke, so eingestellt wird, dass der Abstand der unteren Abschlusskontur der Traverse zu den von der Traverse überstrichenen Fahrzeugflächen während des Trocknungsvorgangs konstant bleibt. Die an den Lichträumen abfallenden Flanken der unteren Abschlusskontur der Traverse können dabei einen senkrechten, unter Winkel abfallenden oder gekrümmten Verlauf aufweisen.

Vorteilhafte Weiterbildungen sind Gegenstand der Unteransprüche.

So kann die die untere Abschlußkontur der Traverse vorgebende Düsenmundanordnung einen linken und einen rechten Düsenmund aufweisen, die durch den mittleren Lichtraum in Fahrzeugquerrichtung voneinander beabstandet sind. Da diese Düsenmundanordnung wesentlich kürzer als ein über die gesamte Breite der Traverse durchgehender Düsenmund ist, kann die Auslassbreite der Düsenmundanordnung entsprechend angepasst werden. Dies führt zu einer erheblich erhöhten Wurfweite der Düse ohne Druckabfall. Der Abstand vom Düsenmund zu der zu trocknenden Fläche kann deshalb ebenfalls erhöht werden.

Damit werden Beschädigungen an den von den Sicherheitseinrichtungen nur unzuverlässig erfassten Dach-Aufbauteilen (Dachrails, Skiträger, Blaulicht, Taxischilder usw.) ebenso vermieden werden, wie das Aufsetzen der Düse auf am Heck montierten Ersatzreifen, beispielsweise bei Offroadfahrzeugen. Die Lage des zum Überfahren von Mittelantennen vorgesehenen, in Fahrzeugquerrichtung mittleren Lichtraums kann dabei beispielsweise relativ zu in der Waschhalle für das Fahrzeug vorgesehenen, seitlichen Radleitschienen festgelegt werden, wobei seitliche Toleranzen berücksichtigt werden müssen, die unterschiedliche Fahrzeugbreiten und -stellungen ausgleichen. Die beiden äußeren Lichträume sind dagegen so gewählt, dass an der Fahrzeugseite beispielsweise am Kotflügel angebrachte, starre Fahrzeugantennen außerhalb des Arbeitsbereichs des Trocknungssystems liegen. Vorteilhaft ist der linke und der rechte Düsenmund dabei im wesentlichen frontal auf das Fahrzeug gerichtet und verläuft in Fahrzeugquerrichtung.

Die Höhensteuerung der Trocknungstraverse erfolgt dabei mit den bekannten Verfahren, beispielsweise mittels Lichtschrankensensoren, die die Fahrzeugkontur abtasten und damit die Höhenkoordinate für die Trocknungstraverse vorgeben. Das Heben und Absenken der höhenverstellbaren Traverse in links und rechts beispielsweise an einem Portal angebrachten Führungsschienen kann dabei mittels Hubriemen entweder mit einer Direktaufrollung oder über einen Zahnriemen mit Gegengewichtsentlastung erfolgen.

Vorteilhaft ist es dabei, wenn an der Traverse unterseitig zwei Ventilatoren angebracht sind, die in Fahrzeugquerrichtung so voneinander beabstandet sind, dass der mittlere Lichtraum gebildet wird. Dadurch gelingt es einerseits, die Sicherheitsfunktion für den mittleren Fahrzeugbereich bereitzustellen. Andererseits kann der Abstand des linken und des rechten Düsenmunds der beiden Ventilatoren und damit der tiefste Punkt der höhenverfahrbaren Traverse erheblich weiter vom Fahrzeug beabstandet sein als bei den heute üblichen, über die gesamte Fahrzeugbreite durchgehenden, konturfolgenden Tastdüsen. Denn zu dem oben stehend beschriebenen Effekt der kurzen Düsenmundanordnung tritt noch der weitere Effekt von kurzen Übertragungswegen der in den Ventilatoren beschleunigten Luft hinzu, so dass Leitungs- bzw. Rohrreibungsverluste weitestgehend vermieden werden, weil die Luft aus den Ventilatoren direkt auf das Fahrzeug gelenkt wird.

Aufgrund des höheren Abstands überstreichen die beiden aus dem linken und dem rechten Ventilator an dem jeweiligen Düsenmund austretenden Luftströme die volle Fahrzeugbreite, auch wenn der linke und der rechte Düsenmund insgesamt nur einen kleinen Teil der Fahrzeugbreite abdecken. Zudem wird die im Bereich unterhalb des jeweiligen Düsenmunds frontal auf das Fahrzeug auftreffende Luftströmung jeweils entlang der Fahrzeugkontur abgelenkt und überstreicht daher die gesamte Fahrzeugoberfläche, so dass ein über die ganze Fahrzeugbreite zufriedenstellender Trocknungseffekt erzielt werden kann.

Herkömmliche Ventilatoren sind dabei in etwa schneckenförmige Bauteile, d.h. Bauteile mit einer im wesentlichen zylinderförmigen Außenkontur mit einem Düsenstummel bzw. Auslassstutzen zum Düsenmund hin. Besonders vorteilhaft ist es dabei, die Baugröße der Ventilatoren so zu wählen, dass die Außenkonturen der beiden Ventilatoren im Bereich der beiden Seitenflanken des Fahrzeugs einer Kreisbahn folgend nach oben hin zurückweichen und dort die Seiten-Lichträume freigeben. Auf diese Weise kann der zwischen den Lichträumen zur Verfügung stehende Raum auf optimale Weise für die Ventilatoren genutzt werden, so dass Ventilatoren mit relativ großen Rotordurchmessern und damit relativ niedrigen Drehzahlen und somit hohen Wirkungsgraden eingesetzt werden können. Es wäre jedoch auch denkbar, kleinere Ventilatoren mit entsprechend höheren Drehzahlen zu verwenden, solange die durch die oben stehend beschriebenen Sicherheitsvorgaben definierten Lichträume eingehalten werden. Das gleiche gilt für Ventilatoren anderer Bauform, so dass alle denkbaren Gebläse (in Axialverdichter-, Radialverdichter- sowie Mischbauweise) eingesetzt werden können.

Weitere vorteilhafte Ausgestaltungen der Erfindung betreffen Zusatzfunktionen, die mit dem erfindungsgemäßen Trocknungsrahmen bereitgestellt werden können. Beispielsweise können der linke und der rechte Düsenmund bzw. im Fall der an der Traverse angebrachten Ventilatoren die Ventilatoren schwenkbar an der Traverse angebracht sein, so dass nicht nur auf horizontalen Flächen des zu trocknenden Fahrzeugs ein gutes Trocknungsergebnis erzielt wird, sondern auch auf geneigten Flächen, wie beispielsweise am Fahrzeugheck oder an der Fahrzeugfront und an den Fahrzeugflanken. Dabei kann einerseits ein Verschwenken um eine in Fahrzeuglängsrichtung verlaufende Achse vorgesehen sein, um die Luftströmung beispielsweise beim Vorlauf des Portals zur Mitte des Fahrzeugdachs hin zu konzentrieren und sie beim Rücklauf verstärkt auf den Außenbereich der Dachfläche zu lenken. Andererseits kann auch ein Verschwenken der Düsenmundanordnung bzw. der Ventilatoren um eine im wesentlichen in Fahrzeugquerrichtung verlaufende Achse vorgesehen sein, um eine Ausrichtung der Luftströmung auf Front- und Heckpartie des Fahrzeugs zu ermöglichen. Die Düsen bleiben dabei in den von den Lichtschranken bzw. sonstigen Steuereinrichtungen vorgesehenen Bereichen, wobei auch die Schwenkung durch die Vorgabewerte der Steuerung gesteuert werden kann. Darüber hinaus ist auch eine mehrachsige Verschwenkung der Düsenmundanordnung bzw. der Ventilatoren denkbar. Ferner wäre es ebenfalls denkbar, die Ventilatoren in Fahrzeugquerrichtung verfahrbar an der Trocknungstraverse aufzuhängen. In diesem Zusammenhang könnte auch eine Abtastung der Fahrzeugbreite mit geeigneten Sensoren (z.B. Lichtschranke oder Radar) vorgesehen sein, um die exakte Breite des Fahrzeugs und die exakte Breitenkoordinate des Fahrzeugs bezüglich des Trocknungsrahmens festzustellen und durch dementsprechendes Verfahren der Ventilatoren entlang der Traverse die gewünschten Lichträume exakt einzustellen.

Darüber hinaus kann an der Traverse bzw. an den Ventilatoren eine Sprührohranordnung vorgesehen sein, die zur Hochdruck-Vorwäsche insbesondere der horizontalen Fahrzeugflächen eingesetzt werden kann. Wenn die Sprührohranordnung aus einzelnen Sprührohren besteht, die jeweils einem Düsenmund zugeordnet sind, kann sichergestellt werden, dass die Sprührohre nicht in die benötigten Lichträume für Seitenantennen und Dachaufbauten hineinragen. Vorteilhaft sind die Sprührohre dabei parallel zum und nahe des jeweiligen Düsenmunds angeordnet, da auf diese Weise ein möglichst geringer Abstand vom zu reinigenden Fahrzeug eingehalten wird und damit eine gute Ausnutzung des Sprühmitteldrucks für die Reinigungswirkung erreicht wird.

Es versteht sich von selbst, dass die vorstehend genannten und die nachstehend noch zu erläuternden Merkmale nicht nur in der angegebenen Kombination verwendbar sind, sondern auch in anderen Kombinationen oder in Alleinstellung, ohne den Rahmen der Erfindung zu verlassen.

Nachfolgend werden anhand schematischer Zeichnungen bevorzugte Ausführungsformen der Erfindung näher erläutert. Es zeigen:
- Figur 1: eine schematische Darstellung einer Portalwaschanlage mit einem Trocknungsrahmen gemäß einer ersten Ausführungsform der Erfindung,
- Figur 2: eine Portalwaschanlage im Vorlauf mit einem Trocknungsrahmen gemäß einer zweiten Ausführungsform der Erfindung,
- Figur 3: die Portalwaschanlage aus Figur 2 im Rücklauf,
- Figur 4: eine Detailansicht eines Ventilators und seiner Aufhängung an der Traverse eines Trocknungsrahmens gemäß einer weiteren Ausführungsform der Erfindung, und
- Figur 5: eine schematische Darstellung einer Portalwaschanlage mit einem dem Stand der Technik entsprechenden Trocknungsrahmen.

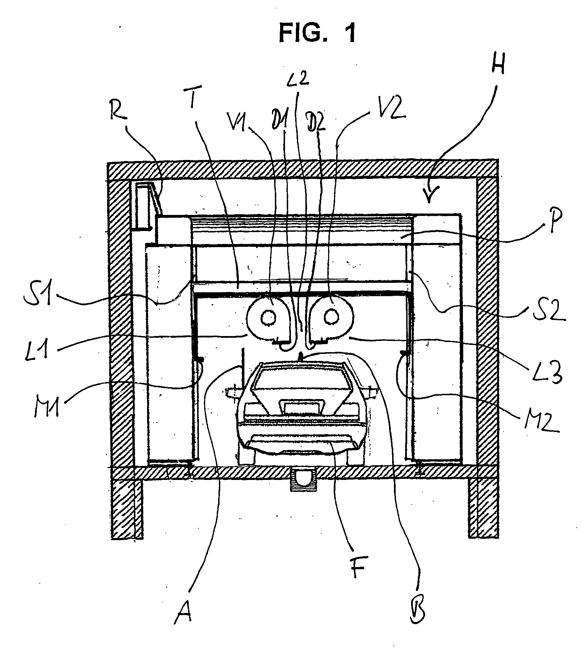

Zunächst wird Bezug genommen auf die Figur 1. In einer Halle H einer Portalwaschanlage ist dabei ein Portal P gezeigt, das einen Trocknungsrahmen gemäß einer ersten Ausführungsform der Erfindung aufweist. An den beiden Seitensäulen des Portals P sind dabei Führungsschienen S1, S2 angeordnet, auf denen eine Traverse T höhenverstellbar aufgenommen ist. Die Höhenverstellung kann dabei über einen Riemenantrieb bewerkstelligt werden, der mit R angedeutet ist. Zur Ansteuerung des Riemenantriebs R sind an seitlich an der Traverse T angebrachten Auslegern Lichtschrankensensoren M1, M2 vorgesehen, mit denen ein jeweiliges, die Portalwaschanlage eingefahrenes Fahrzeug F abgetastet wird. Durch die Länge der Ausleger kann dabei der gewünschte Abstand der Traverse T von einem zu trocknenden Fahrzeug F festgelegt werden. Unterseitig an der Traverse T ist eine aus zwei Ventilatoren V1, V2 bestehende Gebläseeinheit aufgehängt. Die Ventilatoren V1, V2 weisen dabei jeweils einen in Fahrzeugquerrichtung verlaufenden, in etwa parallel zum Fahrzeugdach ausgerichteten Düsenmund D1, D2 auf, über den die das Fahrzeug trocknende Luftströmung zum Fahrzeug hin gelenkt wird.

Das Fahrzeug F weist dabei eine am Kotflügel angebrachte, feststehende Antenne A auf. Ferner befindet sich ein Blaulicht B in einer mittleren Position auf dem Fahrzeugdach. Man erkennt, dass dem Blaulicht B ein mittlerer Lichtraum L2 zwischen den beiden Ventilatoren V1, V2 zugeordnet ist, so dass auch dann, wenn die Lichtschranke M1, M2 das Blaulicht nicht erfasst, keine Kollisionsgefahr zwischen den Ventilatoren bzw. Düsenstummel V1, V2 und dem Blaulicht B besteht. Man erkennt darüber hinaus, dass mit den seitlichen Lichträumen L1, L3 weiterhin ein Sicherheitsabstand zu seitlichen Anbauten am Fahrzeug, im vorliegenden Fall der feststehenden Antenne A, geschaffen ist, so dass auch in diesem Bereich keine Kollisionsgefahr besteht, wenn die Seitenanbauten nicht von der Lichtschranke M1, M2 erfasst werden. Bei der gezeigten Ausführungsform sind dabei die beiden Ventilatoren V1, V2 fest mit der Traverse T verbunden, beispielsweise angeschraubt oder mit anderen fachnotorisch bekannten Befestigungsmitteln, insbesondere Tragrahmen oder dergleichen, angebracht. Die Stromversorgung der beiden Ventilatoren kann dabei über ebenfalls entlang der Traverse T geführte und im daran anschließenden Bereich frei aufgehängte Leitungen erfolgen.

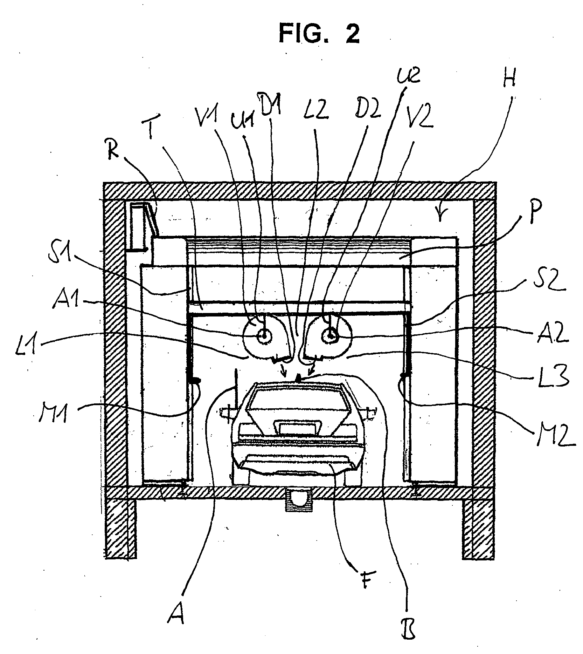

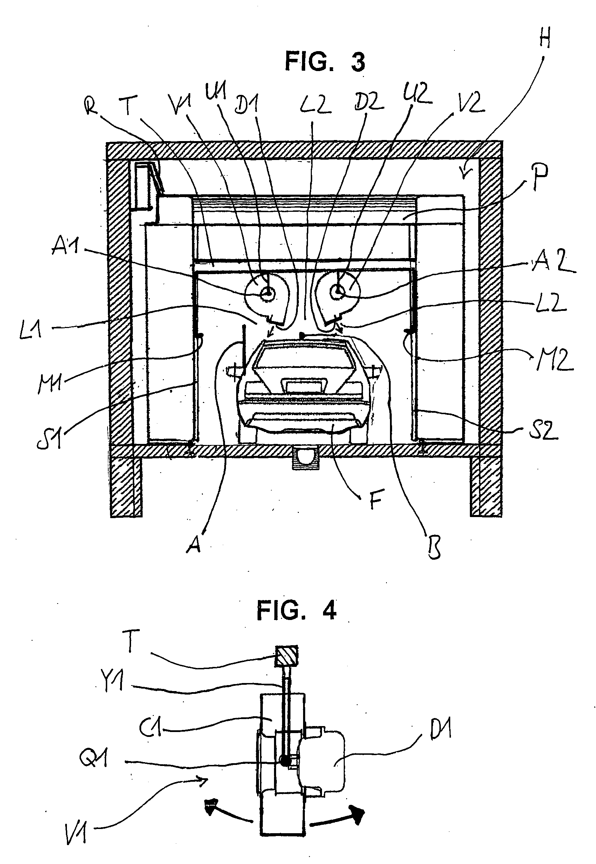

Eine weitere Ausführungsform der vorliegenden Erfindung ist den Figuren 2 und 3 zu entnehmen. Diese Ausführungsform unterscheidet sich von der Ausführungsform der Figur 1 lediglich dadurch, dass die beiden Ventilatoren V1, V2 jeweils um eine in Fahrzeuglängsrichtung verlaufende Achse A1, A2 schwenkbar an der Traverse T aufgehängt sind. Figur 2 zeigt dabei die Waschanlage beim Vorlauf des Portals. Dabei sind die beiden Ventilatoren V1, V2 nach innen verschwenkt, so dass die aus dem linken und dem rechten Düsenmund D1, D2 austretende Luftströmung (mit Pfeilen angedeutet) zur Fahrzeugmitte hin ausgerichtet ist. Figur 3 zeigt dagegen die Waschanlage während des Rücklaufs des Portals P. Die beiden Ventilatoren V1, V2 sind dabei nach außen hin verschwenkt, so dass die durch den linken und den rechten Düsenmund D1, D2 austretenden Luftströmungen (mit Pfeilen angedeutet) zu den Fahrzeugseiten hin gelenkt wird. Im dargestellten Ausführungsbeispiel sind die beiden Ventilatoren V1, V2 dabei jeweils über einen U-förmigen Tragrahmen U1, U2 an der Traverse T aufgehängt, wobei der Boden des U-förmigen Tragrahmens jeweils die Schwenkachse A1, A1 bildet. Es wäre jedoch auch jede andere, dem Fachmann im Rahmen seines handwerklichen Könnens bekannte, schwenkbare bzw. gelenkige Befestigung an der Traverse T denkbar. Das Verschwenken der beiden Ventilatoren V1, V2 kann dabei mit einem für die gewählte Aufhängung geeigneten Antrieb bewerkstelligt werden (nicht gezeigt), im Fall des U-Tragrahmens beispielsweise mit einem zwischen den beiden Ventilatoren V1, V2 angeordneten, in beide Richtungen arbeitenden Hydraulikzylinder oder dergleichen, der von der Steuerung der Portalwaschanlage angesprochen werden kann.

Ferner kann auch eine um eine in Fahrzeugquerrichtung verlaufende Achse schwenkbare Aufhängung der Ventilatoren V1, V2 an der Traverse T vorgesehen sein. Eine derartige Ausführungsform der Erfindung ist in der Figur 4 dargestellt.

Dabei ist der Ventilator V1 mit abgenommenem Gehäuse gezeigt. Der Ventilator V1 ist ebenfalls in einem Tragrahmen Y1 gehalten. Anders als bei der vorhergehenden Ausführungsform handelt es sich dabei aber nicht um einen U-förmigen Tragrahmen, sondern um einen Tragrahmen in Form eines auf dem Kopf stehenden Ypsilons, der an den Seitenwänden des Ventilatorgehäuses mit dem Ventilator V1 verbunden ist. Dort sind entsprechende Schwenkbolzen vorgesehen, so dass der Ventilator V1 in der durch Pfeile angedeuteten Richtung um eine in Fahrzeugquerrichtung verlaufende Schwenkachse Q1 schwenkbar ist, die durch die Schwenkbolzen gebildet wird. Der Tragrahmen Y1 ist wiederum an der Traverse T befestigt.

Wie man erkennt, weist der Ventilator V1 einen Elektromotor D1 auf, mit dem ein Rotorblatt bzw. ein Lüfterrad C1 angetrieben wird. Es wäre jedoch auch denkbar, den Tragrahmen Y1 über ein Scharnier an der Traverse T aufzuhängen und ihn an den Gegenenden fest mit dem Ventilator zu verbinden. In diesem Fall könnte ein an der Traverse T angebrachter Drehantrieb direkt an dem Drehbolzen angreifen. In dem Fall, dass das Drehgelenk wie in der Figur 4 dargestellt an der Achse Q1 angeordnet ist, könnte dagegen ein am Ventilatorengehäuse angreifender Mechanismus vorgesehen sein, um die Verschwenkbewegung zu bewerkstelligen. Die Steuerung kann dabei jeweils entsprechend des an der Waschanlage eingestellten Steuerprogramms erfolgen.

Selbstverständlich sind Abweichungen von den gezeigten Ausführungsformen möglich, ohne den Grundgedanken der Erfindung zu verlassen.

So wäre es ebenfalls denkbar, anstatt zwei nebeneinander an der Traverse aufgehängten Ventilatoren einen zentral an der Traverse aufgehängten Ventilator vorzusehen (fest oder schwenkbar), wobei der Aufbau des Trocknungsrahmens ansonsten die vorstehend beschriebenen Merkamle aufweisen könnte. Zwar können mit dieser Anordnung nicht sämtliche Vorteile der Erfindung erreicht werden, wie beispielsweise die Kollisionssicherheit aufgrund der Lichträume. Aber schon allein aufgrund der kurzen Weglänge vom Ventilator zum Düsenmund und aufgrund der kurzen Düsenmundlänge kann eine derart große Wurfweite der Luftströmung erreicht werden, dass ein wesentlich größerer Sicherheitsabstand als bei der herkömmlichen, konturfolgenden Tastdüse mit dem sich über die gesamte Fahrzeugbreite erstreckenden Düsenmund erzielt werden kann. Andererseits bietet diese Anordnung gegenüber einer höhenfesten Gebläseeinheit die bekannten Vorteile eines verbesserten Trocknungswirkungsgrads.

Ferner wäre es denkbar, den oder die Ventilatoren in Querrichtung beweglich an der Traverse aufzuhängen und die Arbeitsstellung der Ventilatoren entsprechend einer Abtastung des Fahrzeugs entlang der Querrichtung einzustellen.

## Patentansprüche

1. Trocknungsrahmen für Fahrzeugwaschanlagen mit:
zumindest einer höhenverfahrbaren Traverse (T), an der eine Gebläseeinrichtung (V1, V2) zum Trocknen von von der Traverse (T) zu überstreichenen Flächen eines Fahrzeugs (F) angebracht ist, die eine eine untere Abschlusskontur der Traverse (T) vorgebende Düsenmundanordnung (D1, D2) aufweist, wobei die Höhenlage der Traverse entsprechend eines gewünschten Abstands der unteren Abschlusskontur der Traverse (T) von dem zu überstreichenen Fahrzeug (F) steuerbar ist, **dadurch gekennzeichnet, dass** die untere Abschlusskontur der Traverse (T) an einem in etwa der Mitte der Fahrzeugbreite befindlichen Bereich und an beiden Seitenenden des Fahrzeugs entsprechenden Bereichen nach oben zurückweicht und Lichträume (L1, L2, L3) freigibt.

2. Trocknungsrahmen nach Anspruch 1, **dadurch gekennzeichnet, dass** die Düsenmundanordnung (D1, D2) einen linken und einem rechten Düsenmund (D1, D2) aufweist, die durch den mittleren Lichtraum (L2) in Fahrzeugquerrichtung voneinander beabstandet sind.

3. Trocknungsrahmen nach Anspruch 1 oder 2, **dadurch gekennzeichnet, dass** der linke und der rechte Düsenmund (D1, D2) in Fahrzeuglängsrichtung voneinander beabstandet sind.

4. Trocknungsrahmen nach einem der vorhergehenden Ansprüche, **dadurch gekennzeichnet, dass** der linke und der rechte Düsenmund (D1, D2) um eine im wesentlichen in Fahrzeuglängsrichtung verlaufende Achse schwenkbar mit der Traverse (T) verbunden sind.

5. Trocknungsrahmen nach einem der vorhergehenden Ansprüche, **dadurch gekennzeichnet, dass** der linke und der rechte Düsenmund (D1, D2) um eine im wesentlichen in Fahrzeugquerrichtung verlaufende Achse schwenkbar mit der Traverse (T) verbunden sind.

6. Trocknungsrahmen nach einem der Ansprüche 2 bis 5, **dadurch gekennzeichnet, dass** der linke und der rechte Düsenmund (D1, D2) jeweils einen unterseitig an der Traverse (T) angebrachten Ventilator (V1, V2) nach unten abschließen, wobei die Ventilatoren (V1, V2) durch ihre in Fahrzeugquerrichtung vorgesehene Beabstandung voneinander den mittleren Lichtraum (L2) bilden und jeweils an ihrer Außenseite nach oben zurückweichen und so an den beiden den Seitenenden des Fahrzeugs entsprechenden Bereichen die weiteren Lichträume (L1, L3) freigeben.

7. Trocknungsrahmen nach Anspruch 6, **dadurch gekennzeichnet, dass** die Ventilatoren (V1, V2) um eine im wesentlichen in Fahrzeuglängsrichtung verlaufende Achse schwenkbar an der Traverse (T) aufgehängt sind.

8. Trocknungsrahmen nach Anspruch 6 oder 7, **dadurch gekennzeichnet, dass** die Ventilatoren (V1, V2) um eine im wesentlichen in Fahrzeugquerrichtung verlaufende Achse schwenkbar an der Traverse (T) aufgehängt sind.

9. Trocknungsrahmen nach einem der vorhergehenden Ansprüche, **dadurch gekennzeichnet, dass** an der Traverse (T) eine Sprührohranordnung für die Fahrzeugvorwäsche vorgesehen ist, die nicht in die Lichträume (L1, L2, L3) hineinragt.

10. Trocknungsrahmen nach Anspruch 9, **dadurch gekennzeichnet, dass** die Sprührohranordnung jeweils ein auf dem linken und rechten Ventilator (V1, V2) angeordnetes, zum jeweiligen Düsenmund (D1, D2) paralleles Sprührohr umfasst.
